# EUROPÄISCHE PATENTSCHRIFT

(11) **EP 2 276 948 B1**
(45) Veröffentlichungstag und Bekanntmachung des Hinweises auf die Patenterteilung: **05.06.2013**
(21) Anmeldenummer: 09745479.7
(22) Anmeldetag: 27.02.2009
(51) Int. Cl.: F16H 59/12, F16H 63/42

(54) **GEBERGERÄT FÜR EINE GANGSCHALTUNG**
DETECTOR DEVICE FOR A GEAR SHIFT
DISPOSITIF TRANSMETTEUR POUR SYSTÈME DE CHANGEMENT DE VITESSES

(30) Priorität: 10.05.2008 DE 102008023231
(43) Veröffentlichungstag der Anmeldung: 26.01.2011
(73) Patentinhaber: WABCO GmbH, 30453 Hannover (DE)
(72) Erfinder: KLÜCK, Frank-Peter, 31832 Springe (DE); LÜLFING, Ralph-Carsten, 30826 Garbsen (DE); SCHULZ, Marcus, 31535 Neustadt (DE)
(74) Vertreter: Lauerwald, Jörg
(86) Internationale Anmeldenummer: PCT/EP2009/001399
(87) Internationale Veröffentlichungsnummer: WO 2009/138145

(56) Entgegenhaltungen:
- EP-A- 1 900 974
- DE-A1- 10 211 968
- JP-A- 2006 177 401
- US-A1- 2003 188 594

## Beschreibung

Die Erfindung bezieht sich auf ein Gebergerät für eine Gangschaltung eines Kraftfahrzeugs gemäß dem Oberbegriff des Patentanspruchs 1. Ein solches Gebergerät ist in der US 2003/0188594 offenbart.

Derartige Gebergeräte dienen zum Einlegen bzw. zum Wechseln der Gänge von Schaltgetrieben von Kraftfahrzeugen.

Zur Kontrolle des Fahrers, welcher Gang gerade eingelegt ist, sind im einfachsten Fall entsprechende Markierungen auf der Konsole oder auf dem Schalthebel bekannt, welche mit den verschiedenen Stellungen des Schalthebels übereinstimmen und so die gerade eingelegte Gangstufe anzeigen.

Eine derartige Anzeige ist jedoch nicht möglich bzw. zweckmäßig, wenn, wie bei einer sogenannten Schrittschaltung, der Schalthebel z. B. nur drei Stellungen aufweist. Diese dienen zur Raufschaltung, zur Runterschaltung oder als Leerlaufstellung. Für derartige Schaltgeräte sind Displays bekannt, die sich z. B. auf der Konsole des Schalthebels oder auch im Knauf des Schalthebel befinden (DE 102 11 968 B4, EP 1502802 A1).

Bekannt ist auch, das Display getrennt vom Gebergerät im Armaturenbrett des Fahrzeugs anzuordnen. Nachteilig dabei ist, dass der Fahrzeughersteller hierzu das Armaturenbrett extra anpassen muss.

Auf den bekannten Displays ist zum Teil nicht nur der jeweils eingelegte Gang sichtbar, sondern es können auch Warnhinweise oder Fehler in der Elektronik angezeigt werden.

Weiter sind auch Schaltgeräte bekannt, bei denen am Knauf des Schalthebels oder an der Konsole Taster oder Schalter angeordnet sind, mit deren Hilfe der Fahrer weitere Befehle in die Getriebesteuerungs-Elektronik eingeben kann.

Der Erfindung liegt die Aufgabe zugrunde, ein Gebergerät der eingangs genannten Gattung mit Display anzugeben, bei dem die Montage des Displays erleichtert ist.

Diese Aufgabe wird durch die im Patentanspruch 1 enthaltene Erfindung gelöst. Die Unteransprüche enthalten zweckmäßige Weiterbildungen.

Das erfindungsgemäße Gebergerät kann vorteilhaft als Nachrüst-Lösung in Kraftfahrzeuge eingebaut werden.

Die Erfindung wird im Folgenden anhand einer Zeichnung näher erläutert.

Diese zeigt in
- Fig. 1: das erfindungsgemäße Gebergerät in einer Draufsicht,
- Fig. 2: das Gebergerät in einer teilweise aufgeschnittenen Seitenansicht, und in

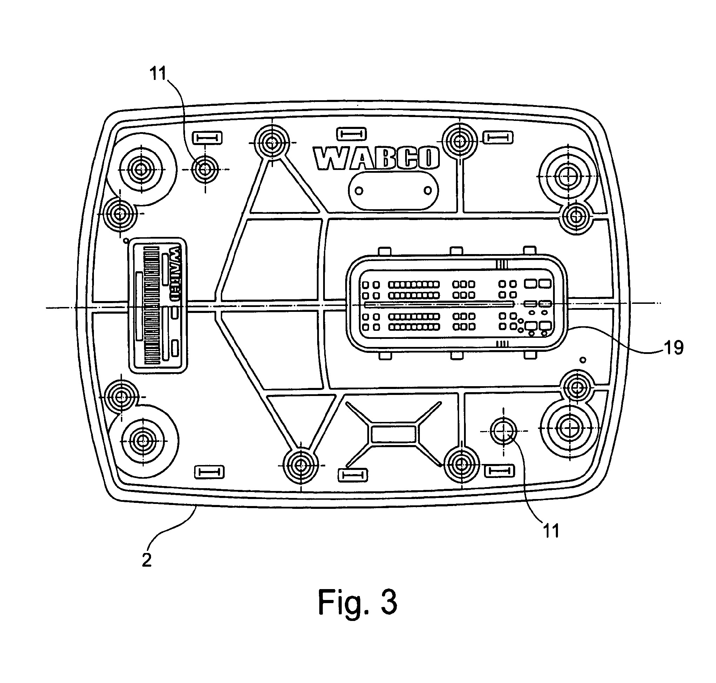

- Fig. 3: das Gebergerät in einer Ansicht von unten.

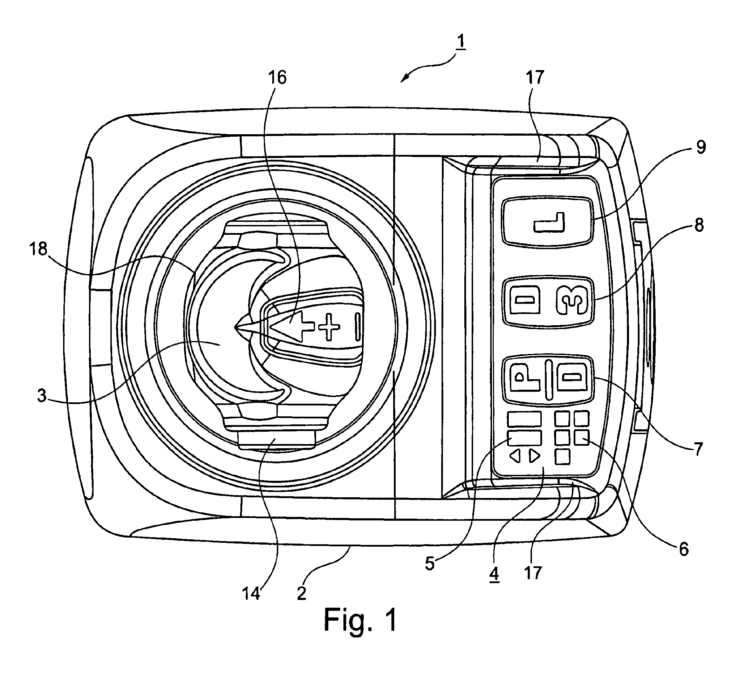

In Fig. 1 ist das erfindungsgemäße Gebergerät, das im Wesentlichen aus einer Konsole (2) und einem darauf befindlichen Schalthebel (3) besteht, in der Draufsicht dargestellt. Der Schalthebel (3) ist nach vorne in Richtung eines Pfeiles (16) zur Einlegung von Vorwärtsgängen schwenkbar (Hochschaltung). Es ist jedoch auch eine Bewegung nach rückwärts möglich (Runterschaltung). Der Schalthebel (3) weist weiter links an seinem Knauf (18) einen Taster (14) auf, der durch den Fahrer zur Eingabe zusätzlicher Schaltkommandos genutzt werden kann.

An der dem Fahrer zugewandten Seite des Gebergerätes (1) ist im Sichtfeld des Fahrers ein Display (4) angeordnet. Dieses weist eine zweiziffrige Ganganzeige (5) auf, mittels welcher Gänge von Null bis 99 sowie auch Richtungsanzeigen (Rauf- oder Runterschaltung) darstellbar sind.

Das Display weist weiter eine Fehlercodeanzeige (6) auf, mit welcher Fehler im Getriebe oder in der Elektronik der Getriebesteuerung anzeigbar sind. Falls genügend Platz zur Verfügung steht, kann die Fehlercodeanzeige (6) natürlich auch als Klarschrift-Anzeige ausgebildet sein.

Das Display (4) weist neben den Anzeigen weiter auch berührungsempfindliche Elemente (7, 8, 9) auf. Mit diesen können weitere Schaltbefehle durch den Fahrer eingegeben werden.

In der Fig. 1 dargestellt sind beispielsweise die Befehle
P/D = Parkstellung oder Fahrtstellung
D/3 = Fahrtstellung oder Beschränkung auf 3 Gänge
L = Leerlaufstellung

Natürlich können auch andere Befehle vorgesehen werden, wie beispielsweise
E/P = Economy/Power
M/A = Manuel/Automatic
C = Crawl

Das Display (4) kann vorzugsweise als Touch Screen ausgebildet sein. Es können aber auch eine Folientastatur oder andere Schaltelemente verwendet werden.

Vorteilhaft ist das Display (4) mit oder ohne zugehörige Ansteuerelektronik als eigenes, vorgefertigtes Modul ausgebildet. Es ist vorteilhaft von oben in die Konsole (2) einschnappbar. Hierdurch wird eine Erleichterung der Montage des Displays erzielt.

Das Modul kann auch ohne Anzeigeelemente, also nur mit berührungsempfindlichen Elementen ausgestattet werden. Es weist dann nur aktive berührungsempfindliche Elemente (7, 8, 9) auf.

Zum Schutz des Displays (4) vor unbeabsichtigter Betätigung der berührungsempfindlichen Elemente (7) bis (9), beispielsweise durch einen herabfallenden Gegenstand, kann das Display (4) durch Gehäusevorsprünge (17) geschützt werden. Diese können an zwei Seiten wie dargestellt, oder aber auch umlaufend angeordnet sein.

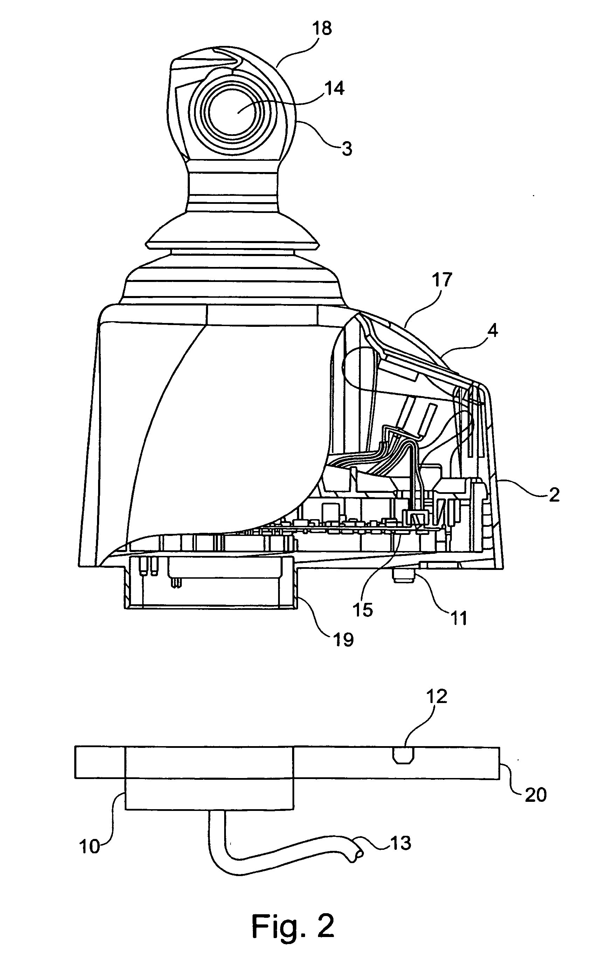

Wie in Fig. 2 dargestellt ist, befindet sich die Getriebesteuer-Elektronik (15) vorzugsweise ganz oder auch nur teilweise in der Konsole (2) des Gebergeräts (1). Im Gegensatz zur sonst üblichen getrennten Anordnung der Elektronik am Getriebe oder an anderer Stelle ergibt sich hierdurch eine Vereinfachung sowohl in der Fertigung als auch in der Fahrzeug-Montage.

Zum Anschluss der Getriebesteuer-Elektronik (15) an das (nicht dargestellte) Fahrzeuggetriebe weist die Konsole (2) an der Unterseite einen elektrischen Anschlussstecker (19) auf. Hierdurch wird ein Anschluss an Aktuatoren oder Sensoren, die sich im Getriebe befinden, oder auch an weitere Elektroniken im Fahrzeug hergestellt.

Das Gebergerät (1) ist auf einer im Fahrzeug befindlichen Grundplatte (20), beispielsweise durch Schrauben (nicht dargestellt), befestigbar. Mit der Befestigung wird gleichzeitig ein elektrischer Kontakt mit einer dem Anschlussstecker (20) gegenüberliegenden Buchse (10) hergestellt. Die Ausbildung von Stecker und Buchse kann natürlich auch umgekehrt sein, es kann also auch die Konsole (2) die Buchse (10) und die Grundplatte (9) den Stecker (19) aufweisen.

Die Buchse (10) weist eine elektrische Anschlussleitung (13) zum Anschluss der Elektronik (15) an das Getriebe oder weitere Bauteile und Elektroniken auf. Die Anschlussleitung (13) kann als Kabelbaum oder auch als Bus, beispielsweise CAN-Bus, ausgeführt sein.

Zur Justierung der Konsole (2) auf der Grundplatte (20) sind Passstifte (11) vorgesehen, die im montierten Zustand in gegenüberliegende Öffnungen (12) der Grundplatte (20) eingreifen. Hierdurch wird gewährleistet, dass das Gebergerät (1) genau passend zur Grundplatte (20) eingebaut werden kann.

Es ist natürlich auch möglich, das Gebergerät (1) mit seinem Anschlussstecker (19) vor seiner Befestigung auf der Grundplatte (20) zunächst elektrisch an ein loses Kabel (Anschlußleitung) (13) mit passendem Gegenstecker anzuschliessen. Anschliessend wird das Gerät dann auf die Grundplatte (20) gesteckt. Dabei nutzt man die beiden Passstifte (11) und die Öffnungen (12), um anschliessend die Schraubgewinde (nicht dargestellt) zur Befestigung des Gebergerätes (1) auf der Grundplatte (20) leichter finden zu können.

## Patentansprüche

1. Gebergerät (1) für eine Gangschaltung eines Kraftfahrzeugs, insbesondere eines Nutzkraftfahrzeugs, mit einer Konsole (2), auf der ein Schalthebel (3) angeordnet ist, und mit einem Display (4), das sich auf der Konsole (2) im Blickfeld des Fahrers befindet, und zur Anzeige von Schaltzuständen und/oder Warnhinweisen dient, wobei
das Display (4) außer Anzeigeelementen (5, 6) auch berührungsempfindliche Elemente (7, 8, 9) aufweist,
**dadurch gekennzeichnet, dass**
das Display (4) als eigenes, vorgefertigtes Modul ausgebildet ist und von oben in die Konsole (2) einschnappbar ist.

2. Gebergerät (1) nach Anspruch 1, **dadurch gekennzeichnet, dass** das Display (4) als Touchscreen ausgebildet ist.

3. Gebergerät (1) nach Anspruch 1, **dadurch gekennzeichnet, dass** das Display (4) als Folientastatur ausgebildet ist.

4. Gebergerät (1) nach einem oder mehreren der Ansprüche 1 bis 3, **dadurch gekennzeichnet, dass** das Display (4) eine Ganganzeige (5) aufweist.

5. Gebergerät (1) nach einem oder mehren der Ansprüche 1 bis 4, **dadurch gekennzeichnet, dass** das Display (4) eine Fehlercodeanzeige (6) aufweist.

6. Gebergerät (1) nach einem oder mehren der Ansprüche 1 bis 5, **dadurch gekennzeichnet, dass** die berührungsempfindlichen Elemente (7, 8, 9) zur Eingabe von gewünschten Getriebe-Positionen (P, D, 3, L) dienen.

7. Gebergerät (1) nach einem oder mehren der Ansprüche 1 bis 6, **dadurch gekennzeichnet, dass** das Display (4) mit oder ohne zugehöriger Ansteuerelektronik als eigenes Modul von außen in die Konsole (2) einschnappbar ist.

8. Gebergerät (1) nach einem oder mehren der Ansprüche 1 bis 7, **dadurch gekennzeichnet, dass** in der Konsole (2) ganz oder teilweise die Getriebesteuer-Elektronik (15) integriert ist.

9. Gebergerät (1) nach Anspruch 8, **dadurch gekennzeichnet, dass** auf der Unterseite der Konsole (2) ein elektrischer Anschlussstecker (19) zum Anschluss der Getriebesteuer-Elektronik (15) an Sensoren und Aktuatoren eines Getriebes angeordnet ist.

10. Gebergerät (1) nach Anspruch 9, **dadurch gekennzeichnet, dass** es auf einer im Fahrzeug befindlichen Grundplatte (20) befestigbar ist, wobei gleichzeitig der Anschlussstecker (19) in eine entsprechende Buchse (10) in der Grundplatte (20) eingreift.

11. Gebergerät (1) nach Anspruch 10, **dadurch gekennzeichnet, dass** die Konsole (2) auf der Unterseite zur Justierung Passstifte (11) aufweist, welche im montierten Zustand in entsprechende Öffnungen (12) der Grundplatte (20) eingreifen.

12. Gebergerät (1) nach einem oder mehreren der Ansprüche 1 bis 11, **dadurch gekennzeichnet, dass** das Display (4) durch einen oder mehrere Gehäusevorsprünge (17) gegen versehentliche Betätigung geschützt ist.

## Claims

1. Signalling device (1) for a gear-shifting means of a motor vehicle, in particular of a utility motor vehicle, having a console (2) on which a gearshift lever (3) is arranged, and having a display (4) which is located on the console (2) in the driver's field of vision, and is used to display shifted states and/or warning messages, wherein
the display (4) has both display elements (5, 6) and touch-sensitive elements (7, 8, 9),
**characterized in that**
the display (4) is embodied as a separate, prefabricated module and can be clicked into the console (2) from above.

2. Signalling device (1) according to Claim 1, **characterized in that** the display (4) is embodied as a touchscreen.

3. Signalling device (1) according to Claim 1, **characterized in that** the display (4) is embodied as a membrane keyboard.

4. Signalling device (1) according to one or more of Claims 1 to 3, **characterized in that** the display (4) has a gearspeed display (5).

5. Signalling device (1) according to one of Claims 1 to 4, **characterized in that** the display (4) has a fault code display (6).

6. Signalling device (1) according to one or more of Claims 1 to 5, **characterized in that** the touch-sensitive elements (7, 8, 9) are used to input desired transmission positions (P, D, 3, L).

7. Signalling device (1) according to one or more of Claims 1 to 6, **characterized in that** the display (4) can be clicked into the console (2) from the outside as a separate module with or without associated actuation electronics.

8. Signalling device (1) according to one or more of Claims 1 to 7, **characterized in that** the transmission control electronics (15) are entirely or partially integrated into the console (2).

9. Signalling device (1) according to Claim 8, **characterized in that** an electrical connecting plug (19) for connecting the transmission control electronics (15) to sensors and actuators of a transmission is arranged on the underside of the console (2).

10. Signalling device (1) according to Claim 9, **characterized in that** said signalling device (1) can be attached to a base plate (20) which is located in the vehicle, wherein the connecting plug (19) simultaneously engages in a corresponding socket (10) in the base plate (20).

11. Signalling device (1) according to Claim 10, **characterized in that** the console (2) has, on the underside, alignment pins (11) for the purpose of adjustment, which alignment pins (11) engage, in the mounted state, in corresponding openings (12) in the base plate (20).

12. Signalling device (1) according to one or more of Claims 1 to 11, **characterized in that** one or more housing projections (17) protect the display (4) against inadvertent activation.

## Revendications

1. Dispositif transmetteur (1) prévu pour un système de changement de vitesse de véhicule automobile, notamment de véhicule automobile utilitaire, avec un tableau de bord (2) sur lequel est disposé un levier de changement de vitesse (3) et avec un écran (4) se trouvant sur le tableau de bord (2) dans le champ de vision du conducteur et servant à afficher des états de changement de vitesse et/ou des messages d'avertissement ;
l'écran (4) comportant également, outre les éléments d'affichage (5, 6), des éléments tactiles (7, 8, 9) ; **caractérisé en ce que** :
l'écran (4) prend la forme d'un module préfabriqué indépendant et pouvant être clipsé par en haut dans le tableau de bord (2).

2. Dispositif transmetteur (1) selon la revendication 1, **caractérisé en ce que** l'écran (4) prend la forme d'un écran tactile.

3. Dispositif transmetteur (1) selon la revendication 1, **caractérisé en ce que** l'écran (4) prend la forme d'un clavier souple à membrane.

4. Dispositif transmetteur (1) selon l'une quelconque des revendications 1 à 3 ou plusieurs d'entre elles, **caractérisé en ce que** l'écran (4) comporte un affichage du rapport de vitesse (5).

5. Dispositif transmetteur (1) selon l'une quelconque des revendications 1 à 4 ou plusieurs d'entre elles, **caractérisé en ce que** l'écran (4) comporte un affichage de code d'anomalie (6).

6. Dispositif transmetteur (1) selon l'une quelconque des revendications 1 à 5 ou plusieurs d'entre elles, **caractérisé en ce que** les éléments tactiles (7, 8, 9) servent à saisir les positions de boîte de vitesses (P, D, 3, L) souhaitées.

7. Dispositif transmetteur (1) selon l'une quelconque des revendications 1 à 6 ou plusieurs d'entre elles, **caractérisé en ce que** l'écran (4) peut être clipsé depuis l'extérieur dans le tableau de bord (2) sous la forme d'un module indépendant avec ou sans système électronique de commande.

8. Dispositif transmetteur (1) selon l'une quelconque des revendications 1 à 7 ou plusieurs d'entre elles, **caractérisé en ce que** tout ou partie du système électronique de commande de boîte de vitesses (15) est intégré dans le tableau de bord (2).

9. Dispositif transmetteur (1) selon la revendication 8, **caractérisé en ce qu'**une fiche mâle (19) de raccordement du système électronique de commande de boîte de vitesses (15) est disposée sur le côté inférieur du tableau de bord (2), au niveau des capteurs et actionneurs d'une boîte de vitesses.

10. Dispositif transmetteur (1) selon la revendication 9, **caractérisé en ce qu'**il peut être fixé sur une plaque de base (20) se trouvant dans le véhicule, la fiche mâle (19) s'emboîtant simultanément dans une fiche femelle (10) correspondante prévue dans la plaque de base (20).

11. Dispositif transmetteur (1) selon la revendication 10, **caractérisé en ce que** le tableau de bord (2) comporte des tiges d'ajustement (11) sur le côté inférieur servant à l'ajustement, lesdites tiges s'emboîtant à l'état monté dans les ouvertures (12) correspondantes de la plaque de base (20).

12. Dispositif transmetteur (1) selon l'une quelconque des revendications 1 à 11 ou plusieurs d'entre elles, **caractérisé en ce que** l'écran (4) est protégé contre tout actionnement involontaire par une ou plusieurs saillies de carter (17).
